# EUROPEAN PATENT SPECIFICATION

(11) **EP 0 296 253 B1**
(45) Date of publication and mention of the grant of the patent: **28.06.1995**
(21) Application number: 88900792.8
(22) Date of filing: 08.01.1988
(51) Int. Cl.: H04L 7/02, H04L 25/49, H04L 27/00

(54) **DISCRIMINATION TIMING CONTROL CIRCUIT**
TAKTUNTERSCHEIDUNGSSTEUERSCHALTUNG
CIRCUIT DE COMMANDE DE LA TEMPORISATION DE DISCRIMINATION

(30) Priority: 12.01.1987 JP 4671/87; 04.03.1987 JP 47799/87; 04.03.1987 JP 47800/87
(43) Date of publication of application: 28.12.1988
(73) Proprietor: FUJITSU LIMITED, Kawasaki-shi, Kanagawa 211 (JP)
(72) Inventor: IWAMATSU, Takanori Fujitsu-Murasakizukaryo, Otawara-shi Tochigi 324 (JP); AONO, Yoshihito, Nasu-gun Tochigi 329-27 (JP); MINOWA, Morihiko, Machida-shi Tokyo 194 (JP); TAKENAKA, Sadao, Yokohama-shi Kanagawa 223 (JP)
(74) Representative: Hansen, Bernd, Dr. Dipl.-Chem.
(86) International application number: PCT/JP88/00013
(87) International publication number: WO 88/05235

(56) References cited:
- JP-A- 5 081 004
- JP-A-54 102 855
- JP-A-57 142 051
- JP-A-57 202 164
- JP-A-59 161 149
- JP-A-60 251 742
- JP-B- 5 023 926
- US-A- 4 627 080

## Description

### TECHNICAL FIELD

The present invention relates to a decision timing control circuit provided in the receiving side of the radio data transmission system utilizing the multi-level amplitude modulation method.

### BACKGROUND ART

In the radio data transmission system utilizing the multi-level amplitude modulation, for instance, the 64-level quadrature amplitude modulation (QAM), binary transmission data is distributed to 3 bits for I channel and 3 bits for Q channel in the sending side. The 3 bits of respective channels are subjected to D/A conversion in the timing of predetermined clock and these signals converted to 8-level signals both in the I channel and Q channel. The 8-level signals of I and Q channels are respectively transmitted after the quadrature amplitude modulation.

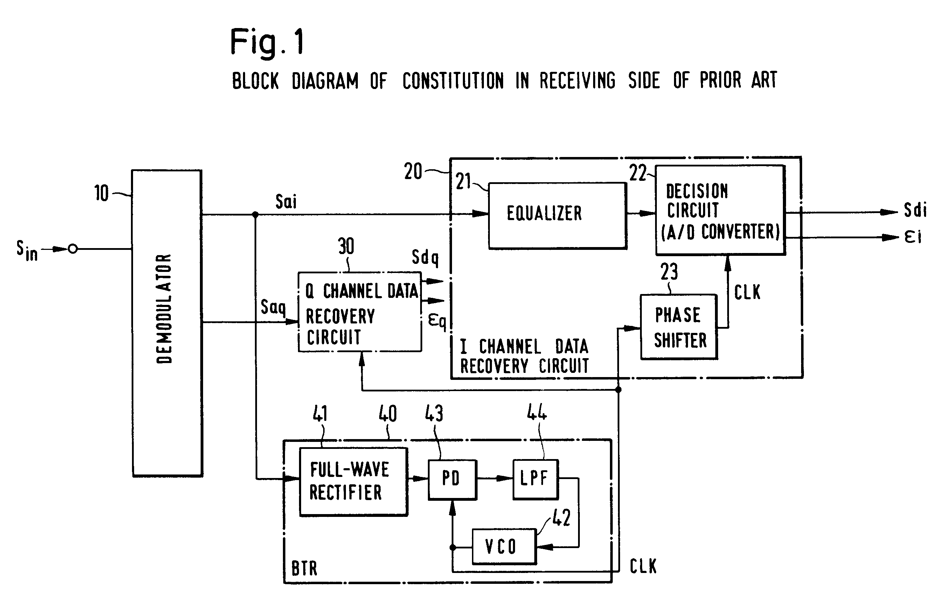

A constitution of the receiving side is indicated in Fig. 1.

A demodulator 10 inputs a receiving signal Sᵢₙ from a receiver (not illustrated) and outputs the 8-level signals Sₐᵢ, S_{aq} of I and Q channels. The 8-level signals Sₐᵢ, S_{aq} of both I and Q channels are respectively input to data recovery circuits 20, 30 of I and Q channels and the I channel signal is also input to a bit timing recovery circuit (BTR) 40. The bit timing recovery circuit 40 rectifies the 8-level signal Sₐᵢ of the I channel with a full-wave rectifier 41 to generate the clock element. The full-wave rectified signal is then input to a phase comparator 43 together with an output of a voltage controlled oscillator (VCO) 42. A phase difference signal output from the phase comparator 43 is applied as a control voltage to VCO 42 through a low-pass filter 44. Thereby, VCO 42 outputs the clock signal CLK which is synchronized with the 8-level signal Sₐᵢ of the I channel.

Meanwhile, the data recovery circuit 20 of I channel inputs the 8-level signal Sₐᵢ of the I channel to the A/D converter 22 provided as a decision circuit through an equalizer 21. The A/D converter 22 inputs the clock CLK sent from the bit timing recovery circuit 40 through a variable phase shifter 23, decides the 8-level signal Sₐᵢ of I channel input in the timing of clock CLK and converts it into a binary digital signal, and outputs the 1 bit lower than the upper 3 bits as the decision error signal ε with such upper 3 bits used as the decision data S_{d}.

Moreover, the data recovery circuit 30 of Q channel has the structure similar to that of the data recovery circuit 20 of I channel.

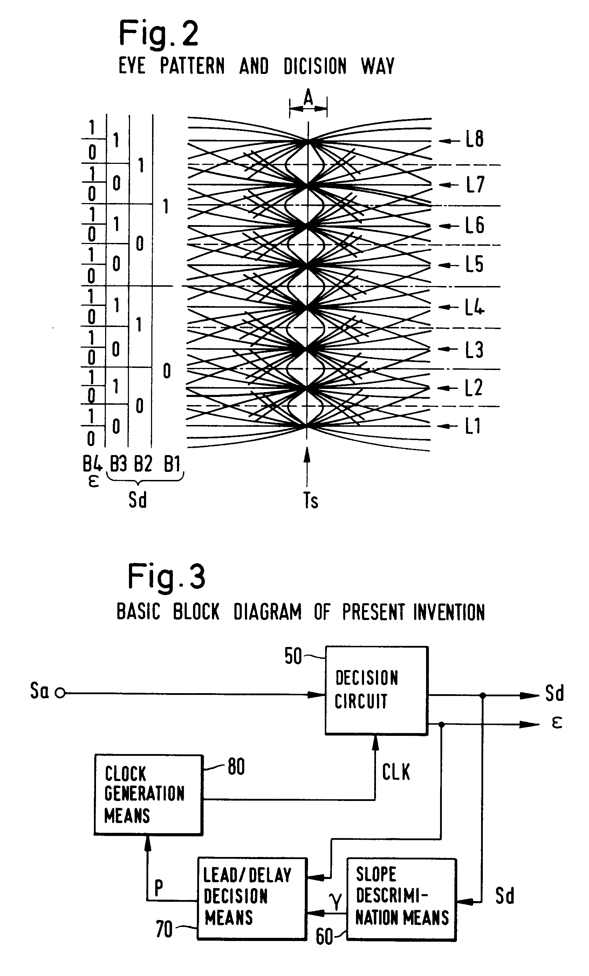

For the radio communication system, it is necessary to limit the frequency band of sending signal and therefore a filter is used in the sending side. Accordingly, the 8-level signal demodulated in the receiving side has the gentle waveform in place of the rectangular waveform. As a result, the 8-level signal demodulated has the eye patter indicated in Fig. 2 and the eye aperture A is rather narrow.

As the decision timing deviates from the center of such aperture A, the error rate becomes worse. Therefore, the phase of recovered clock is adjusted manually with the variable phase shifter and it is fixed when decision is carried out at the optimum decision timing Tₛ.

However, here lies a problem that it is likely that the clock phase deviates, even after it is once fixed, from the optimum decision timing due to temperature change or voltage variation and it is difficult to quickly match the clock phase and optimum decision timing during the pulling-in period in the initial stage of data transmission or when intersymbol interference due to the fading sometimes appearing increases.

In addition, there rises a problem that the demodulated multi-level signal Sₐᵢ (S_{aq}) is disturbed during pulling-in period or when intersymbol interference increases, a number of credible signal points which are required to control synchronization between clock phase and optimum decision timing is a little and thereby a longer time is required until the end of control for matching.

Furthermore, it is also a problem that adjustment of equalizer 21 makes complicated and large scale hardware structure of equalizer.

In order to solve such problems, a decision timing control circuit indicated in the Japanese Patent Application No. 141856/1986 corresponding to EP-A-249931 has been proposed. However, since this decision timing control circuit monitors information corresponding to an error rate and controls the phase of clock to reduce such information, the direction of phase shift is not determined directly from the decision digital signal and phase shift direction is determined by "Trial and Error".

Therefore, such control is complicated and easily receives influences of line conditions.

US-A-4.627.080 discloses an adaptive timing technique for adjusting the sampling times of a received digital signal in order to reduce regeneration errors. A multi-level signal is sampled according to the pulses of a clock signal which may either be too "early" or too "late" compared with an optimum sampling time. Adjustment of the clock pulses is made in response to a sequence of successive digital signal samples and an error signal derived therefrom only when the sequence of samples is either successively increasing or decreasing in value. A ROM is used to generate a signal supplied to one of the inputs of an up/down counter. The signal pulses at one input indicate that the actual sampling time is late relative to the optimum sampling time and that less delay is required. The signal pulses at the other input indicate that the actual sampling time is too early relative to the optimum sampling time and more delay is required. If, however, the sampled values, are not successively increasing or decreasing, an ambiguity as to the proper timing adjustment cannot be resolved. Inspite of not being able to adjust the timing in these situations, the known circuit is complex as three shift registers, a delay circuit, a 9 bit ROM, a first and a second up/down counter are incorporated therein.

### DISCLOSURE OF THE INVENTION

It is a first object of the present invention to provide a circuit which automatically controls the decision timing in the receiving side of the radio data transmission system, considering the problems of prior art explained above. It is a second object of the present invention to provide a decision timing control circuit which assures quick and accurate synchronization of timing even under the conditions other than the normal condition, for instance, during the pulling-in condition or when intersymbol interference increases. It is a third object of the present invention to provide a decision timing control circuit to directly obtain information about the deviating direction of timing from the data decided. Moreover, it is a fourth object of the present invention to provide a decision timing control circuit which may be formed by a simple circuit structure.

The above objects are achieved by a decision timing control circuit for a radio data transmitting system wherein the sending side tranmits a signal through multi-level amplitude modulation of send data with a carrier while the receiving side obtains said send data by deciding the multi-level signal demodulated with a decision circuit which also outputs a decision error signal indicating whether the demodulated multi-level signal is higher or lower than the correct decision level in addition to said send data decided in the timing of a recovered clock signal, comprising: a slope decision means which is operatively connected with the decision circuit which is adapted to decide the slope of the multi-level signal at the center decision timing on the basis of the decision result in at least three continuous decision timings; a lead/delay decision means which is operatively connected with the decision circuit and slope decision means and which is adapted to output the phase decision signal by deciding whether the decision timing at the decision point is leading or delayed from the decision error signal at the center decision timings and the decided slope; and a clock signal generating means which is operatively connected with the lead/delay decision means and the decision circuit and which is adapted to generate the phase-controlled clock signal based on the phase decision signal to be sent to the decision circuit; in which the slope decision means is adapted to output a slope polarity signal which indicates a positive slope when the decision data of decision circuit increases monotonously or a negative slope when it decreases monotonously and a validity signal which indicates the validity of the slope polarity signal when the decision data increases or decreases monotonously or the invalidity of the slope polarity signal when it does not increase or decrease monotonously.

### BRIEF DESCRIPTION OF THE DRAWINGS

Fig. 1 is a block diagram indicating the structure of the receiving side by means of example;
Fig. 2 indicates an eye pattern and decision way;
Fig. 3 is a basic block diagram of the present invention;
Fig. 4 indicates an example of slope decision in the present invention;
Fig. 5 indicates relationship between slope, deviation of decision timing and decision error signal;
Fig. 6 is a block diagram of a first embodiment of the present invention;
Fig. 7 indicates another exmaple of slope discrimination in the present invention;
Fig. 8 is a block diagram of a second embodiment of the present invention;
Fig. 9 is a block diagram of a third embodiment of the present invention;
Fig. 10 is a basic block diagram of a fourth embodiment of the present invention; and
Fig. 11 is a detail block diagram of the fourth embodiment of the present invention.

### BASIC CONSTITUTION OF THE PRESENT INVENTION

Fig. 3 indicates the basic constitution of the present invention.

The decision circuit 50 receives a multi-level signal Sₐ and outputs decision data S_{d} and decision error signal ε. When the number of levels of multi-level signal Sₐ is determined as 2ⁿ, the decision data S_{d} becomes a binary digital signal of n bits. The decision error signal indicates that the input multi-level signal corresponds to the upper or lower range than the center in the range decided in each level. For example, in the case of 8-level signal, three bits B1 ∼ B3 indicate to which level in the 8 levels (L1 ∼ L8) the input signal is near as indicated in Fig. 2 and one bit B4 lower than the decision data is output as the decision error signal ε.

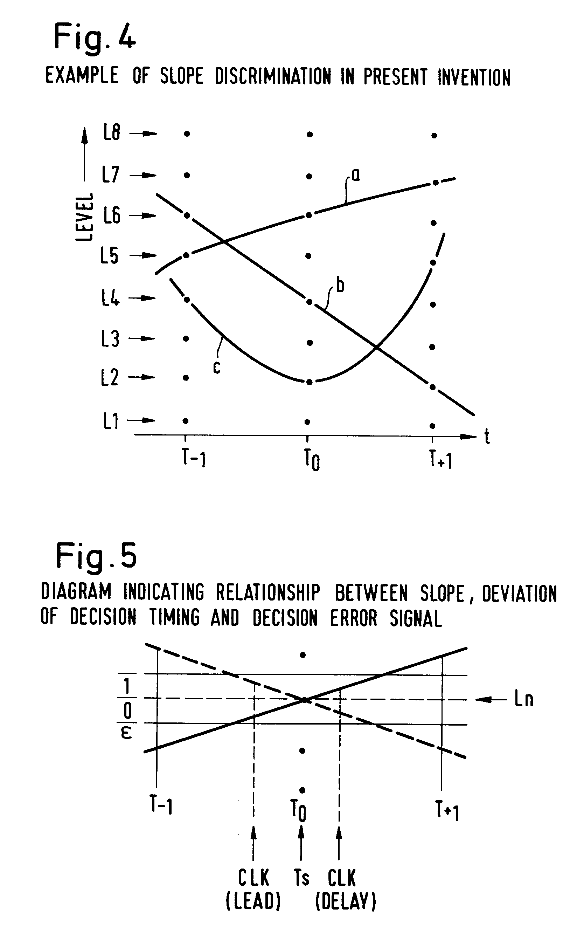

The slope decision means 60 decides slope of multi-level signal at the center decision timings from the decision data of at least continuous three decision timings and outputs a slope indication signal (γ) which indicates such slope is positive or negative. For instance, as indicated in Fig. 4, in case the levels indicated by the decision data at the continuous three decision timings T₋₁, T₀, T₊₁ increase monotonously like the line (a), the slope at the decision timing T₀ is positive. Moreover, the levels decrease monotonously like the line (b), the slope at the decision timing T₀ is negative. But, in case the levels are once decreased and thereafter increased, the slope cannot be defined and becomes unclear.

A lead/delay decision means 70 decides whether the decision timing of decision circuit 50 is leading or delayed from the optimum decision timing Tₛ from the slope indication signal and decision error signal ε at the center decision timing and outputs a phase decision signal P. For instance, in the case of positive slope indicated by a solid line in Fig. 5, the decision error signal becomes 0 when the decision timing by the clock CLK is leading the optimum decision timing Tₛ or becomes 1 when it is delayed. On the other hand, in case the slope is negative as indicated by a broken line, relationship between the lead and delay of decision timing and 1, 0 of the decision error signal ε is reversed from that of positive slope. Thereby, lead or delay of the decision timing can be decided from positive or negative slope and decision error signal ε.

A clock generating means 80 generates the clock for decision to send it to the decision circuit 50 and changes phase of clock on the basis of the phase decision signal P sent from the lead/delay decision means 70.

### First Embodiment:

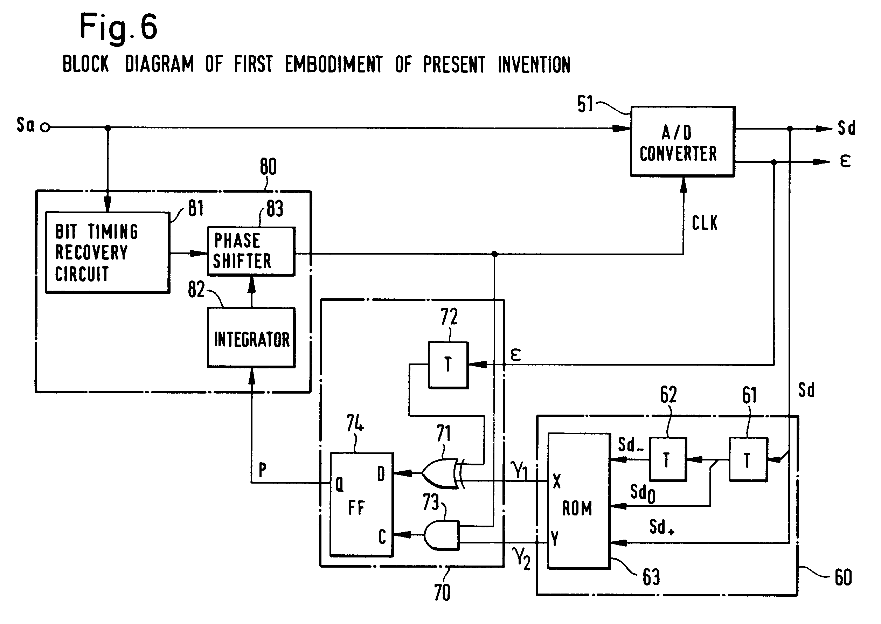

A structure of the first embodiment of the present invention is indicated in Fig. 6.

The A/D converter 51 is corresponding to the decision circuit 50 of Fig. 3 and inputs the 8-level signal Sₐ and outputs the decision data S_{d} and decision error signal ε indicated in Fig. 2.

The delay circuits 61, 62 and ROM 63 correspond to the slope decision means 60 of Fig. 3 and the decision data S_{d} is sequentially input to the cascaded delay circuits (T) 61 and 62.

As a delay circuit, a D type flip-flop may be used. When the decision data output from the delay circuit 61 is the decision data S_{d0} at the center decision timing, the decision data S_{d-} which has appeared before one clock is output from the delay circuit 62 and the decision data S_{d+} which appears after one clock is input to the delay circuit 61. These three decision data S_{d-}, S_{d0}, S_{d+} are input to ROM 63 as the adresses. In the case of 8-level signal, the address of ROM 63 becomes 9 bits since the decision data is formed by 3 bits. Contents of X and Y of ROM 63 are respectively slope polarity signal γ₁ of one bit and validity signal γ₂ of one bit. These slope polarity signal γ₁ and validity signal γ₂ correspond to the slope indication signal γ. The slope polarity signal γ1 becomes "1" for positive slope or "0" for negative slope. The validity display signal γ₂ becomes "1" when the slope polarity sigal γ₁ is valid or "0" when it is invalid. For example, in the case of curve (a) of Fig. 4, S_{d-} becomes "100", S_{d0} becomes "101" and S_{d+} becomes "110" and the slope is positive. Therefore, contents X, Y of address "100101110" of ROM 63 respectively become "1", "1". In similar, contents X, Y of address "101011001" for the line (b) become "0", "1" and contents X, Y of address "011001100" for the line (c) become "0" or "1" and "0". When Y = "0", content of X may be "0" or "1" since it does not give any influence on the succeeding circuits. For the other addresses, X = "1", Y = "1" can be obtained for monotonous increase, while X = "0", Y = "1" for monotonous decrease and X = "0" or "1", Y = "0" for the slopes other than monotonous increase and monotonous decrease.

An exclusive OR circuit 71, delay circuit (T) 72, AND circuit 73 and D type flip-flop (FF) 74 correspond to the lead/delay decision means 70 of Fig. 3. The slope polarity signal γ₁ sent from ROM63 is input to the one input terminal of exclusive OR circuit 71, while the decision error signal ε is input to the other input terminal through the delay circuit 72. The delay circuit 72 is provided to synchronize the decision error error signal ε to the timing of inputting the decision data S_{d0} at the center decision timing to ROM 63. An output of the exclusive OR circuit 71 becomes "0" which indicates that the decision timing is delayed when the slope polarity signal γ₁ is "0" and decision error signal ε is "0" and when the slope polarity signal γ₁ is "1" and decision error signal ε is "1" and becomes "1" which indicates that the decision timing is leading in other cases. Meanwhile, the validity signal γ₂ is converted to the RZ (Return to Zero) signal by the AND circuit 70 and is then input to the clock terminal C of D type flip-flop. Thereby, an output of the exclusive OR circuit 71 is newly held in the D type flip-flop 74 when the validity signal is "1". If the validity signal γ₂ is "0", the old value is still held. The value held in the D type flip-flop 74 is output as the phase decision signal P.

A bit timing recovery circuit 81, integrator 82 and phase shifter 83 correspond to a clock generating means 80. The clock recovery circuit 81 is similar to the bit timing recovery circuit (BTR) 40 indicated in Fig. 1 and recovers the clock from the 8-level signal Sₐ to output it. The integrator 82 integrates the phase decision signal P. The phase shifter 83 shifts the recovered clocks depending on the integral value and outputs it to the A/D converter 51 as the decision clock CLK. Thereby, the clock CLK is controlled in such a manner as the decision is always carried out in the optimum decision timing.

### Second Embodiment:

In realization of the slope decision indicated in Fig. 4, if line condition is bad and decision of the center decision timing T₀ is conducted at the next level, the decision error signal has reverse polarity and decision timing control error may be generated.

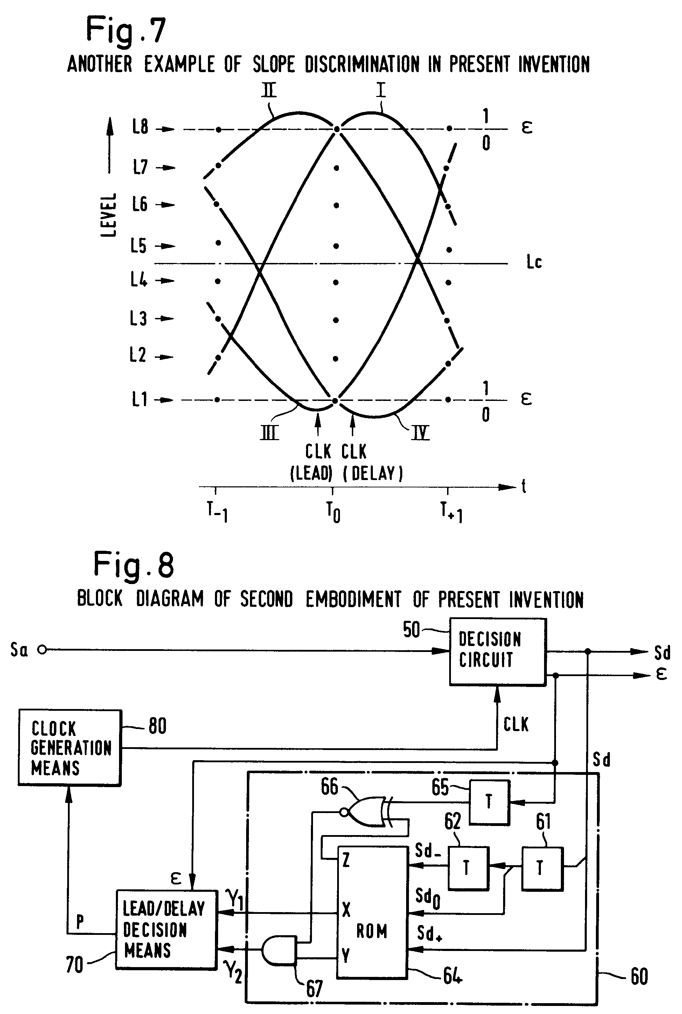

Fig. 7 indicates an example of slope decision which is suitable for bad line condition. When the 8-level signal changes as the line I indicates, namely, when the level of decision data at the decision timing T₋₁ is lower than the center level L_{c}, the level of decision data at the decision timing T₀ is maximum level L8 and the level of decision data at the decision timing T₊₁ is higher than the center level L_{c}, it is impossible that the signal to be decided in the level higher than that at the decision level T₀ is decided in the level lower than the actual level. Therefore, when the decision error signal ε is "1", such information has high reliability and it is also reliable that slope is positive. As explained above, when the level of decision data at the decision timing T₀ is maximum level and the decision error signal ε is "1" and when the level of decision data at the decision timing T₀ is minimum level and the decision error signal ε is "0", the decision error signal ε has high reliability. When the level of decision data at the decision timing T₋₁ and the level of decision data at the decision timing T₊₁ are opposed to each other around the center level L_{c}, it is very much reliable to make decision for positive or negative slope at the decision timing T₀. Namely, the decision error signal ε has very high reliability when the decision error signal ε is "1" in the waveform in such a type as indicated by the line I or II in Fig. 7 and when the decision error signal ε is "0" in the waveform in such a type as indicated by the line III or IV, and moreover the waveform indicated by the line I or III has high reliability of positive slope, while the waveform indicated by the line II or IV has high reliability of negative slope.

Fig. 8 indicates a constitution of the second embodiment of the present invention.

As a decision circuit 50, lead/delay decision means 70 and clock generating means 80, the circuits indicated in Fig. 6 may be used.

The delay means 61, 62, 65, ROM 64, inverse exlcusive OR circuit 66 and OR circuit 67 correspond to the slope decision means 60 of Fig. 3 and conduct slope decision indicated in Fig. 7. Operations of delay circuits 62 and 62 are same as those of Fig. 6. As the contents X of ROM64, the slope polarity signal γ₁ is written, while the data "1" is written in the address corresponding to the type of lines II and IV and the data "0" in the address corresponding to the type of lines II and IV. As the contents Y of ROM64, the data "1" is written in the address corresponding to the type of lines I, II, III and IV and the data "0" in the other addresses. The content Z indicates that the decision data at the decision timing T₀ corresponds to the maximum level or minimum level, and the data "1" is written in the address corresponding to the type of lines I and II, while the data "0" in the address corresponding to the type of lines III and IV. The Z output of ROM64 and the decision error signal ε at the decision timing T₀ sent through the delay circuit 65 are input the inverse exclusive OR circuit 66. The exclusive NOR circuit 66 outputs "1" when the Z output of ROM64 is "1" and the decision error signal ε is "1", and when the Z output of ROM64 is "0" and the decision error signal ε is "0" and also outputs "0" in other cases. Both outputs of exclusive NOR circuit 66 and Y output of ROM64 are input to the AND circuit 67. Thereby, an output of the AND circuit 67 becomes "1" for the type indicated by lines I and II and for the decision error signal ε of "1" and becomes "0" for other cases. Accordingly, an output of the AND circuit 67 may be used as the validity signal γ₂. Moreover, the X output of ROM64 may be used as the slope polarity signal γ₁.

### Third Embodiment:

In the clock recovery circuit 81 of the embodiment indicated in Fig. 6, VCO 42 controls the oscillation frequency (phase) based on the phase difference signal sent from a phase comparator 43 as indicated in Fig. 1. An output of VCO 42 is further phase-controlled by the phase shifter 83 of Fig. 6. Therefore, the phase control is carried out at the two points for the clock CLK and this circuit structure is not effective.

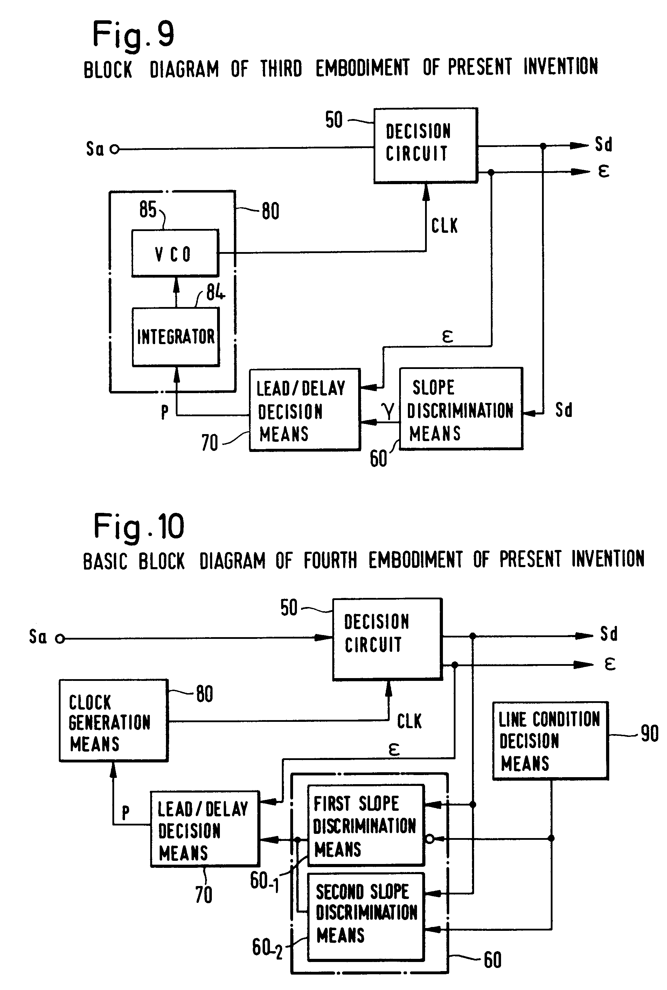

Fig. 9 is the structure of the third embodiment. As the decision circuit 50, slope decision means 60 and lead/delay decision means 70, the circuits indicated in Fig. 6 may be used.

The integrator 84 and VCO85 corresponds to a clock generating means 80 indicated in Fig. 6. The integrator 84 integrates the decision signal P sent from the lead/delay decision means 70. VCO85 oscillates with he frequency corresponding to an integral value and outputs the decision clock CLK to the decision circuit 50. The integrator 84 operates in common as the integrator 82 of Fig. 6 and the low-pass filter 44 of Fig. 1. Thereby, the full-wave rectifier 41 and phase comparator 43 of Fig. 1 and the phase shifter 83 of Fig. 6 may be omitted.

### Fourth Embodiment:

Fig. 10 is a basic constitution of the fourth embodiment of the present invention. In Fig. 10, a line condition decision means 90 is provided in addition to the constitution indicated in Fig. 3 in this embodiment and the first slope decision means 60₋₁ and the second slope decision means 60₋₂ are provided as the slope decision means 60 to select the one of these slope decision means 60₋₁, 60₋₂ in accordance with the line condition. As the decision circuit 50, lead/delay decision means 70 and clock generating means 80, the circuits similar to those of Fig. 6 may be used.

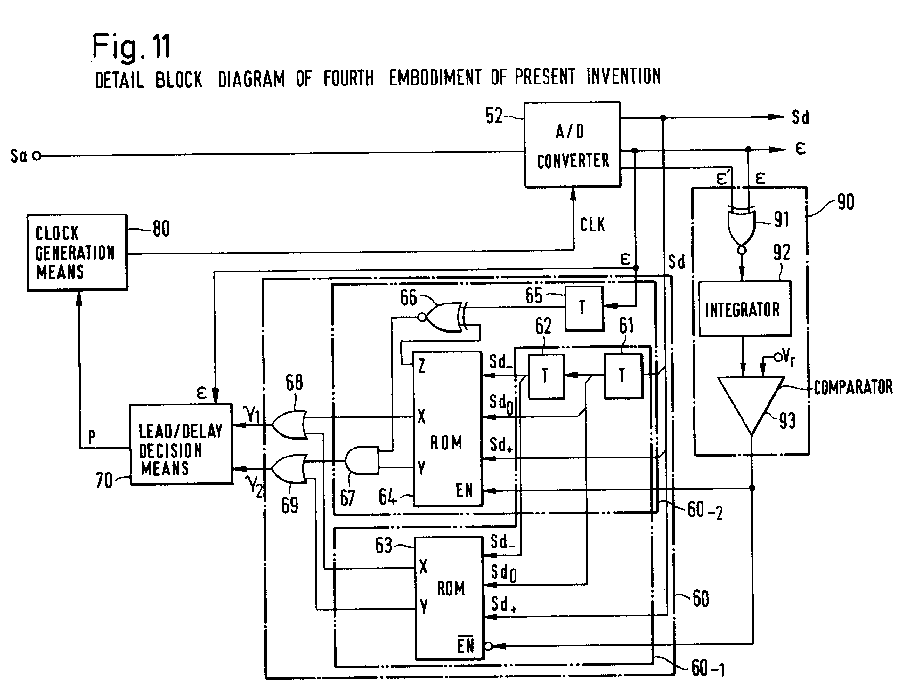

Fig. 11 indicates detail constitution of the fourth embodiment of the present invention. The internal constitution of the slope decision means 60₋₁ of Fig. 1 and that of the slope decision means 60₋₂ of Fig. 2 are respectively similar to that of the slope decision means 60 of Fig. 8. However, ROM63 and ROM64 are respectively provided with the enable terminals (E̅N̅, EN) and these are driven when "0" and "1" are respectively input to these terminals. These circuits stop the operations when "1" and "0" are respectively input to such terminals. Moreover, the delay circuits 61 and 62 are used in common by the first and second slope decision means 60₋₁, 60₋₂.

The exclusive NOR circuit 91, integrator 92 and comparator 93 correspond to the line condition decision means 90 of Fig. 10.

The A/D converter 52 corresponds to the decision circuit 50 of Fig. 3 and outputs not only the decision data S_{d} and decision error signal but also the sub-decision error signal ε′. The sub-decision error signal ε′ indicates whether the multi-level signal exists in the upper or lower range when the range sectioned by the decision error signal ε is further divided into two sections, and the signal becomes "1" and "0" for respective ranges. Such signal can be obtained as the 5th bit B5 for decision circuit of the 8-level signal.

When the decision error signal ε is "1" and the sub-decision error signal ε′ is "1", the input level to the A/D converter 52 is in the higher range among two ranges having the levels higher than the correct decision level. In similar, when the decision error signal ε is "0" and sub-decision error signal ε′ is "0", an error from the correct decision level is large. On the other hand, when the decision signal and sub-decision error signal ε′ are respectively "1" and "0" or "0" and "1", an error from the correct decision level is small.

The exclusive NOR circuit 91 outputs "1" when the decision error signal ε and sub-decision error signal ε′ are respectively "0" and "0" or "1" and "1", namely when error from the correct decision level is large, and also outputs "0" when the decision error signal and sub-decision error signal ε′ and sub-decision error signal are respectively "0" and "1" or "1" and "0", namely when error from the correct decision level is small.

An integrator 92 integrates output "1" of the exclusive NOR circuit 91 with the predetermined time constant. The comparator 93 compares such integrated value with the reference voltage Vᵣ and outputs "1" when the integrated value is larger or "0" when the integrated value is smaller. That is, when the error from the correct decision level often becomes large, the integrator decides that the line condition has changed bad and outputs "1".

While the comparator 93 outputs "0", ROM63 of the first slope decision circuit 60₋₁ is driven to realize the slope decision explained in regard to the first embodiment and outputs the slope polarity signal γ₁ and validity signal γ₂ respectively through the OR circuits 68 and 69. In this case, the probability for input of the waveform which makes valid the slope polarity signal becomes high comparatively.

While the comparator 93 outputs "1", ROM64 of the second slope decision circuit 60₋₂ is driven to realize the slope decision explained in regard to the second embodiment and outputs the slope polarity signal γ₁ and validty signal γ₂ respectively through the OR circuits 68 and 69. In this case, the probability for input of waveform which makes valid the slope polarity signal is low but reliability of slope decision when it becomes valid is high and large effect can be obtained when the line condition becomes bad.

In each embodiment explained above, the slope decision is carried out on the basis of the decision data of three continuous decision timings but it may also be done on the basis of the decision data of three or more decision timings.

## Claims

1. A decision timing control circuit for a radio data transmitting system wherein the sending side transmits a signal through multi-level amplitude modulation of send data with a carrier while the receiving side obtains said send data by deciding the multi-level signal demodulated with a decision circuit which also outputs a decision error signal (ε) indicating whether the demodulated multi-level signal is higher or lower than the correct decision level in addition to said send data (S_{d}) decided in the timing of a recovered clock signal (CLK), comprising:
- a slope decision means (60) which is operatively connected with the decision circuit (50) which is adapted to decide the slope of the multi-level signal at the center decision timing on the basis of the decision result (S_{d}) in at least three continuous decision timings;
- a lead/delay decision means (70) which is operatively connected with the decision circuit (50) and slope decision means (60) and which is adapted to output the phase decision signal (P) by deciding whether the decision timing at the decision point is leading or delayed from the decision error signal (ε) at the center decision timings and the decided slope; and
- a clock signal generating means (80) which is operatively connected with the lead/delay decision means (70) and the decision circuit (50) and which is adapted to generate the phase-controlled clock signal (CLK) based on the phase decision signal (P) to be sent to the decision circuit (50);
**characterized** in that
- the slope decision means (60) is adapted to output a slope polarity signal (γ₁) which indicates a positive slope when the decision data (S_{d}) of decision circuit (50) increases monotonously or a negative slope when it decreases monotonously and a validity signal (γ₂) which indicates the validity of the slope polarity signal (γ₁) when the decision data (S_{d}) increases or decreases monotonously or the invalidity of the slope polarity signal (γ₁) when it does not increase or decrease monotonously.

2. A decision timing control circuit according to claim 1, wherein the slope decision means (60) is adapted to output, as the slope indication signal (y), the validity signal (γ₂) which indicates validity when the decision data (S_{d0}) at the center decision timing (T₀) in the decision circuit (50) has the maximum or minimum level, the decision data (S_{d-}) at the preceding decision timing (T₋₁) and the decision data (S_{d+}) of the succeeding decision timing (T₊₁) have the levels opposed to each other around the center level and the error bit (ε) higher than the maximum level or lower than the minimum level, or indicates invalidity in other cases and the slope polarity signal (γ₁) which indicates the positive slope when the decision data (S_{d+}) at the succeeding decision timing (T₊₁) is higher than the decision data (S_{d-}) at the preceding decision timing (T₋₁) in case the validity signal (γ₂) indicates the validity or indicates the negative slope when the decision data (S_{d+}) at the succeeding decision timing (T₊₁) is lower than the decision data (S_{d-}) at the preceding decision timing (T₋₁).

3. A decision timing control circuit according to any of the claims 1 and 2, further comprising a line condition decision means (90) which is operatively connected with the slope decision means (60) and which is adapted to decide line condition to output the decision result to the slope decision means (60), wherein the slope decision means (60) comprises a first slope decision means (60₋₁) and a second slope decision means (60₋₂) any one of which is selectively driven in accordance with the decision result of line condition.

4. A decision timing control circuit according to any of the claims 1 to 3, wherein the lead/delay decision means (70) is adapted to decide lead or delay of decision timing from exclusive OR between the decision error signal (ε) sent from the decision circuit (50) and the slope polarity signal (γ₁) sent from the slope decision means (60) and to hold the decision result as a new decision result when the validity signal (γ₂) sent from the slope decision means (60) indicates validity or holds the old decision result as it is when the validity signal (γ₂) indicates invalidity.

5. A decision timing control circuit according to any of the claims 1 to 4, wherein said clock generation means (80) comprises a bit timing recovery circuit (81) which is adapted to recover the clock from multi-level signal, an integrator (82) which is adapted to integrate the phase decision signal (P) and a phase shifter (83) which is adapted to shift phase of clock recovered on the basis of the integrated value to output to the decision circuit (50).

6. A decision timing control circuit according to any of the claims 1 to 4, wherein the clock generation means (80) comprises an integrator (84) which is adapted to integrate the phase decision signal (P) and an oscillator (85) which is adapted to oscillate with the frequency corresponding to the integrated value.

## Patentansprüche

1. Auswertezeit-Steuerschaltung für ein Radioübertragungssystem, bei dem auf der Sendeseite ein Signal durch Mehrstufen-Amplitudenmodulation der Sendedaten mit einem Träger übertragen werden und auf Empfängerseite die Daten empfangen werden, indem das Mehrstufen-Signal mit einer Auswerte-Schaltung demoduliert wird, die zusätzlich zu dem in Abhängigkeit von einem rückgewonnenen Taktsignal (CLK) rückgewonnenen Sendedaten (S_{d}) ein Auswertefehlersignal (ε) abgibt, das anzeigt, ob das demodulierte Mehrstufen-Signal höher oder niedriger als der korrekte Entscheidungspegel ist, enthaltend:
- eine Neigungs-Auswerte-Vorrichtung (60), die betriebsgemäß mit der Auswerte-Schaltung (50) verbunden ist und zum Auswerten der Neigung des Mehrstufen-Signals zu einem mittleren Auswerte-Zeitpunkt dient, der auf Basis des Auswerte-Ergebnisses (S_{d}) von mindestens drei aufeinanderfolgenden Auswerte-Abschnitten bestimmt wird;
- eine Voreil-/Verzögerungs-Auswerte-Vorrichtung (70), die betriebsgemäß mit der Auswerte-Schaltung (50) und der Neigungs-Auswerte-Vorrichtung (60) verbunden ist und ein Phasen-Auswerte-Signal (P) erzeugt, indem festgestellt wird, ob der Auswerte-Zeitpunkt am Auswerte-Punkt im Vergleich zum Auswerte-Fehlersignal (ε) im mittleren Auswerte-Zeitpunkt und zur festgestellten Neigung voreilt oder nacheilt; und
- eine Taktsignal-Erzeugungs-Vorrichtung (80), die betriebsgemäß mit der Voreil-/Verzögerungs-Auswerte-Vorrichtung (70) und der Auswerte-Schaltung (50) verbunden ist und ein phasengesteuertes Taktsignal (CLK) in Abhängigkeit von dem Phasen-Auswerte-Signal (P) erzeugt, das an die Auswerte-Schaltung (50) weitergeleitet wird;
dadurch **gekennzeichnet**, daß
- die Neigungs-Auswerte-Vorrichtung (60) so ausgebildet ist, daß sie ein Neigungs-Polaritäts-Signal (γ₁) zum Anzeigen einer positiven Neigung bei einem monotonen Anstieg des Auswerte-Signals (S_{d}) der Auswerte-Schaltung (50) oder einer negativen Neigung bei einem monotonen Abfallen abgibt, sowie ein Gültigkeits-Signal (γ₂) zum Anzeigen der Gültigkeit des Neigungs-Polaritäts-Signals (γ₁) in dem Fall, in dem das Auswerte-Signal (S_{d}) monoton ansteigt oder abfällt, oder der Ungültigkeit des Neigungs-Polaritäts-Signals (γ₁), wenn dieses nicht monoton ansteigt oder abfällt.

2. Auswertezeit-Steuerschaltung nach Anspruch 1, dadurch gekennzeichnet, daß die Neigungs-Auswerte-Vorrichtung (60) als Neigungs-Hinweis-Signal (γ) das Gültigkeits-Signal (γ₂) abgibt, wobei eine Anzeige einer Gültigkeit erfolgt, falls der Auswerte-Wert (S_{d0}) im mittleren Auswerte-Zeitpunkt (T₀) der Auswerte-Schaltung (50) den maximalen oder minimalen Pegel aufweist, der Auswerte-Wert (S_{d-}) des vorangegangenen Auswerte-Abschnitts (T₋₁) und der Auswerte-Wert (S_{d+}) des nachfolgenden Auswerte-Abschnitts (T₊₁) im mittleren Auswerte-Zeitpunkt zueinander entgegengesetzte Pegel aufweisen, wobei das Fehler-Bit (ε) höher als der maximale Pegel oder niedriger als der minimale Pegel ist, und in den anderen Fällen Gültigkeit anzeigt, und die Neigungs-Auswerte-Vorrichtung (60) ferner ein Neigungs-Polaritäts-Signal (γ₁) abgibt, das eine positive Neigung anzeigt, wenn der Auswerte-Wert (S_{d+}) des nachfolgenden Auswerte-Abschnitts (T₊₁) größer als der Auswerte-Wert (S_{d-}) im vorhergehenden Auswerte-Abschnitt (T₋₁) ist und das Gültigkeits-Signal (γ₂) die Gültigkeit anzeigt oder die negative Neigung anzeigt, falls der Auswerte-Wert (S_{d+}) des nachfolgenden Auswerte-Abschnitts (T₊₁) kleiner als der Auswerte-Wert (S_{d-}) des vorhergehenden Auswerte-Abschnitts (T₋₁) ist.

3. Auswertezeit-Steuerschaltung nach Anspruch 1 oder 2, dadurch gekennzeichnet, daß sie ferner eine Leitungszustand-Auswerte-Vorrichtung (90) enthält, die betriebsgemäß mit der Neigungs-Auswerte-Vorrichtung (60) verbunden ist und den Leitungszustand erfaßt und das Zustands-Ergebnis an die Neigungs-Auswerte-Vorrichtung (60) weiterleitet, wobei die Neigungs-Auswerte-Vorrichtung (60) eine erste Neigungs-Auswerte-Vorrichtung (60₋₁) und eine zweite Neigungs-Auswerte-Vorrichtung (60₋₂) enthält, die jeweils selektiv in Abhängigkeit des Leitungszustandes betrieben werden.

4. Auswertezeit-Steuerschaltung gemäß einem der Ansprüche 1 bis 3, dadurch gekennzeichnet, daß die Voreil/Verzögerungs-Auswerte-Vorrichtung (70) so augebildet ist, daß sie ein Voreilen oder eine Verzögerung des Auswerte-Abschnitts mit Hilfe einer exklusiven ODER-Verknüpfung des Auswerte-Fehler-Signals (ε) der Auswerte-Schaltung (50) und des Neigungs-Polaritäts- Signals (γ₁) der Neigungs-Auswerte-Vorrichtung (60) bestimmt, wobei das Auswerte-Ergebnis als ein neues Auswerte-Ergebnis aufrecht erhalten wird, wenn das Gültigkeits-Signal (γ₂) der Neigungs-Auswerte-Vorrichtung (60) eine Gültigkeit anzeigt und das alte Auswerte-Ergebnis beibehalten wird, falls das Gültigkeitssignal (γ₂) eine Ungültigkeit anzeigt.

5. Auswertezeit-Steuerschaltung gemäß einem der Ansprüche 1 bis 4, dadurch gekennzeichnet, daß die Bittakt-Erzeugungs-Vorrichtung (80) eine Bittakt-Rückgewinnungs-Schaltung (81) zum Wiedergewinnen des Takts des Mehrstufen-Signals enthält, sowie einen Integrator (82) zum Integrieren des Phasen-Auswerte-Signals (T) und einen Phasenschieber (83) zum Einpassen der Phasenlage des wiedergewonnenen und an die Auswerte-Schaltung (50) weiterzuleitenden Takts in Abhängigkeit von dem Integrationswert.

6. Auswertezeit-Steuerschaltung gemäß einem der Ansprüche 1 bis 4, dadurch gekennzeichnet, daß die Takt-Erzeugungs-Vorrichtung (80) einen Integrator (84) zum Integrieren des phasen-Auswerte-Signals (T) enthält, sowie einen mit einer dem Integrationswert entsprechenden Frequenz oszillierenden Oszillator (85).

## Revendications

1. Circuit de commande des instants de détection pour un système de transmission de données par radio, dans lequel le côté d'émission transmet un signal de données d'émission par modulation d'amplitude multi-niveau d'une porteuse, tandis que le côté de réception reçoit lesdites données émises en détectant le signal multi-niveau démodulé par un circuit de détection qui délivre également un signal d'erreur de détection (ε) indiquant si le signal multi-niveau démodulé est supérieur ou inférieur au niveau correct de détection, en plus desdites données émises (S_{d}) détectées par synchronisation d'un signal d'horloge (CLK) récupéré, comportant:
- un moyen (60) de détection de la pente, qui est fonctionnellement relié au circuit de détection (50) et est adapté pour détecter la pente du signal multi-niveau à l'instant central de détection, sur base du résultat de la détection (S_{d}) d'au moins trois instants continus de détection;
- un moyen (70) de détection d'avance/retard, qui est fonctionnellement relié au circuit de détection (50) et au moyen (60) de détection de la pente, et qui est adapté pour délivrer le signal (P) de détection de phase en détectant si l'instant de détection au point de détection est en avance ou en retard par rapport au signal (ε) d'erreur de détection, aux instants centraux des détections et à la pente détectée; et
- un moyen (80) de génération d'un signal d'horloge qui est fonctionnellement relié au moyen (70) de détection d'avance/retard et au circuit de détection (50), et qui est adapté pour générer le signal d'horloge (CLK) commandé en phase, sur base du signal (P) de détection de phase à envoyer au circuit de détection (50);
caractérisé en ce que
- le moyen (60) de détection de la pente est adapté pour délivrer un signal (γ₁) de signe de la pente, qui indique une pente positive lorsque les données de détection (S_{d}) du circuit de détection (50) augmentent de manière monotone, ou une pente négative lorsqu'elles diminuent de manière monotone, et un signal de validité (γ₂) qui indique la validité du signal (γ₁) de signe de la pente lorsque les données de détection (S_{d}) augmentent ou diminuent de manière monotone, ou la non validité du signal (γ₁) de signe de la pente lorsqu'elles n'augmentent ou ne diminuent pas de manière monotone.

2. Circuit de commande des instants de détection selon la revendication 1, dans lequel le moyen (60) de détection de la pente est adapté pour délivrer comme signal (γ) d'indication de la pente le signal de validité (γ₂) indiquant la validité lorsque les données de détection (S_{d0}) présentent, à l'instant central (T₀) de la détection par le circuit de détection (50), le niveau maximum et le niveau minimum, lorsque les données de détection (S_{d-}) à l'instant précédent de détection (T₋₁) et les données de détection (S_{d+}) du moment de détection suivant (T₊₁) ont des niveaux opposés l'un à l'autre autour du niveau central, et que le bit d'erreur (ε) est supérieur au niveau maximum ou inférieur au niveau minimum, ou indique la non-validité dans d'autres cas, et le signal (γ₁) de signe de la pente qui indique une pente positive lorsque les données de détection (S_{d+}) à l'instant de détection suivant (T₊₁) sont supérieures aux données de détection (S_{d-}) à l'instant de détection précédent (T₋₁), lorsque le signal de validité (γ₂) indique la validité, ou qui indique une pente négative lorsque les données de détection (S_{d+}) à l'instant de détection suivant (T₊₁) sont inférieures aux données de détection (S_{d-}) à l'instant de détection précédent (T₋₁).

3. Circuit de commande des instants de détection selon l'une quelconque des revendications 1 et 2, comportant en outre un moyen (90) de détection de l'état d'une ligne, qui est fonctionnellement relié au moyen (60) de détection de la pente, et qui est adapté pour détecter l'état d'une ligne, pour délivrer le résultat de la détection vers le moyen (60) de détection de la pente, dans lequel le moyen (60) de détection de la pente comporte un premier moyen (60₋₁) de détection de la pente et un second moyen (60₋₂) de détection de la pente, dont l'un quelconque est piloté sélectivement en fonction du résultat de la détection de l'état de la ligne.

4. Circuit de commande des instants de détection selon l'une quelconque des revendications 1 à 3, dans lequel le moyen (70) de détection d'avance/retard est adapté pour détecter une avance ou un retard de l'instant de détection à partir d'un OU exclusif entre le signal (ε) d'erreur de détection émis par le circuit de détection (50) et le signal (γ₁) de signe de la pente émis par le moyen (60) de détection de la pente, et pour conserver le résultat de la détection comme nouveau résultat de détection lorsque le signal de validité (γ₂) émis par le moyen (60) de détection de la pente indique la validité, ou pour conserver l'ancien résultat de détection tel quel lorsque le signal de validité (γ₂) indique une non-validité.

5. Circuit de commande des instants de détection selon l'une quelconque des revendications 1 à 4, dans lequel ledit moyen (80) de génération d'un signal d'horloge comporte un circuit (81) de récupération de la synchronisation des bits, qui est adapté pour récupérer le signal d'horloge à partir du signal multi-niveau, un intégrateur (82) qui est adapté pour intégrer le signal (P) de détection de phase et un déphaseur (83) qui est adapté pour déphaser le signal d'horloge récupéré, sur base de la valeur intégrée, à délivrer au circuit de détection (50).

6. Circuit de contrôle des instants de détection selon l'une quelconque des revendications 1 à 4, dans lequel le moyen (80) de génération d'un signal d'horloge comporte un intégrateur (84) qui est adapté pour intégrer le signal (P) de détection de phase, et un oscillateur (85) qui est adapté pour osciller à la fréquence correspondant à la valeur intégrée.
